# NEUE EUROPÄISCHE PATENTSCHRIFT

(11) **EP 0 865 732 B2**
(45) Veröffentlichungstag und Bekanntmachung des Hinweises auf die Entscheidung über den Einspruch: **28.05.2008**
(45) Hinweis auf die Patenterteilung: 09.01.2002
(21) Anmeldenummer: 98810106.9
(22) Anmeldetag: 11.02.1998
(51) Int. Cl.: A22C 11/12

(54) **Maschine zum automatischen Abbinden von in einer Wursthaut eingefülltem Fleisch**
Machine for automatically tying meat packed in casings
Machine à lier automatiquement de la chair ensachée en boyaux

(30) Priorität: 19.02.1997 CH 38497
(43) Veröffentlichungstag der Anmeldung: 23.09.1998
(73) Patentinhaber: Pedroia, Luigi, 6648 Minusio (CH); Pedroia, Stefano, 6648 Minusio (CH)
(72) Erfinder: Pedroia, Luigi, 6648 Minusio (CH); Pedroia, Stefano, 6648 Minusio (CH)
(74) Vertreter: Gaggini, Carlo

(56) Entgegenhaltungen:
- EP-A- 0 040 175
- EP-A- 0 283 063
- FR-A- 2 297 002

## Beschreibung

Die vorliegende Erfindung betrifft eine Maschine zum automatischen Abbinden von in eine Wursthaut eingefülltem Fleisch mittels einer Schnur bzw. Bindfaden gemäss dem Oberbegriff des Patentanspruchs 1.

Aus der Praxisanwendung sowie aus der Patentliteratur sind zwei grundsätzliche Verfahren bekannt zum automatischen Abbinden der eingefüllten Wurstwaren, z. B. Salami, Salsiz, Würsten, usw.

Das erste dieser Verfahren besteht darin, dass an den Einschnürstellen der Würste echte Knoten ausgeführt werden: Dieses Verfahren wird in Wurstereien beim Handbetrieb angewendet, während die mechanische Ausführung Gegenstand verschiedener Schweizer Patente unter den Nummern 579351, 587610 der gleichen Anmelder ist.

Dieses Verfahren, zweifelsohne ideal unter dem Gesichtspunkt der Qualität der ausgeführten Knoten, weist den Nachteil auf, dass keine hohe Produktionsleistung zu erreichen ist, da die Knüpf-Vorrichtungen kompliziert sowie im Unterhalt heikel und aufwendig sind.

Das andere Verfahren, das heute allgemein angewendet wird, verzichtet auf die Bildung echter Knoten und erreicht die Unterteilung der Wursthaut in einzelne Abschnitte zur Bildung der Salami-Würste und der anderen bekannten Würste mittels einfachem Abbinden, d.h. indem am Abbinde-Punkt eine bestimmte Anzahl Schnurwindungen - normalerweise 1 bis 3 Windungen - angelegt werden, die für eine dauerhafte Unterteilung der eingefüllten Wursthaut-genügen, insbesondere wenn beim Anlegen der Schnurwindungen die Haut und/oder die Schnur feucht sind. Die Praxiserfahrung hat gezeigt, dass dieses Abbinden mittels "Umwindungen" die Herstellung richtig und dauernd ausgebildeten Würsten gewährleistet, insbesondere wenn, wie es üblicherweise ausgeführt wird, zwei Abbindepunkte in kurzem Abstand - einige Millimeter - angelegt werden, zwischen denen die Wursthaut abgeschnitten wer den kann, um die einzelnen Würste abzutrennen.

Die bekannten Maschinen zum automatischen Abbinden von in eine Haut eingefülltem Fleisch, die nach diesem letzteren Verfahren arbeiten, sind mit einer Schnur-Spulenpackung versehen, welche die Wursthaut ein- oder mehrmals umkreist, um dabei eine oder mehr Schnur-Windungen auf der Abbindestelle anzulegen, an der die Wursthaut vorgängig mittels Einengungsmitteln eingeengt wurde. Der Nachteil dieser bekannten Maschinen besteht darin, dass die verwendeten Schnur-Spulen um die Wursthaut kreisen müssen, was zur Folge hat, dass Schnur-Spulen von kleiner Abmessung verwendet werden müssen, damit die infolge der Beschleunigung und der Abbremsung der Spule ausgeübten Kräfte in Grenzen gehalten werden können. Daher müssen die Schnur-Spulen häufig ausgewechselt werden, was die Produktivität der Maschine verringert.

Es ist weiter aus der Praxis und durch die deutsche Gebrauchsmusteranmeldung Nr. 1803 432, am 31.12.1959 veröffentlicht, eine "Wurstabbindemaschine" bekannt gemacht worden, nach welcher "um die abzubindende Wurst eine diese umfassende Garnspule angeordnet ist und diese über einen gemeinsamen Antrieb mit einer Festhaltevorrichtung für das Garnende, sowie mit Steuereinrichtungen für eine Garnabschneidevorrichtung in Wirkungsverbindung steht". Diese Maschine ist von der Anmeldefirma Benz Söhne KG aus Ladenburg in einer begrenzten Anzahl von Exemplaren gebaut und vertrieben worden, konnte jedoch nie zu einem Durchbruch in der Praxis führen, da sie lediglich als eine Hilfsvorrichtung für den Metzger in Betracht kam und absolut ungenügend für eine Automatisierung des Abbindeprozesses war. Bei der DE-GM 1803 432 handelt es sich nämlich nur um eine handbetriebene Maschine, welche es dem Metzger gestattet, einzelne Abbindestellen an von Hand gehaltenen Würsten herzustellen, wobei der Operateur u.a. noch die Aufgabe hat, die Schnur bei der Abbindung von Hand zu bremsen und bei welcher nach jeder Abbindeoperation der Faden abgeschnitten werden muss. An dieser Vorrichtung fehlen nämlich alle Voraussetzungen, wie eine effiziente Kontrolle der Schnurspannung während und nach der Abbindeoperation, die sichere Kontrolle der Masse der Schnurspule während ihrer Drehung - damit beim Abstellen der Spule keine unnötigen Schnurstücke aus der Spule abgewickelt werden - die Kontinuität der Arbeit (die Schnur wird nach jeder Abbindung abgeschnitten), für eine Automatisierung der Arbeit: Es handelt sich lediglich um eine handbetriebene Hilfsvorrichtung, welche dem Metzger helfen soll, bei sehr niedriger Geschwindigkeit - praktisch nicht schneller als wenn er konventionelle Knoten von Hand um die Würste legen würde - einzelne Abbindungen zu realisieren. Es ist jedoch zu sagen, dass diese Konstruktion, und vor allem die DE-GM, die Anwendung einer die Wurst koaxial umkreisenden Schnurspule gezeigt hat.

Ziel der vorliegenden Erfindung ist es daher, die Nachteile gemäss dem Stand der Technik der Abbindemaschinen für eingefülltes Fleisch oder ähnliche Produkte zu überwinden und eine Maschine zu schaffen, mittels der die Beschränkungen der Geschwindigkeit und damit der Produktivität überwunden werden können und ein automatisierter Betrieb realisierbar wird. Insbesondere geht es darum, die Häufigkeit der Stillstände für das Auswechseln der Schnurspulen zu verringern und zusätzlich die Unwuchtprobleme auszuschalten, die infolge der beträchtlichen um den Abbindepunkt rotierenden Massen entstehen und die entsprechend wechselnden Kräfte auf die Elemente der Maschine einwirken lassen und die die Arbeitsbedingungen generell beeinträchtigen. Die vorliegende Erfindung bezweckt daher, eine Maschine zu schaffen, die ein grosse Zahl von Abbindungen pro Zeiteinheit bei gleichbleibender Qualität und bei verringertem Wartungsaufwand, insbesondere bezüglich des Schnurspulenwechsels, ausführen kann.
Diese Ziele werden erreicht mittels einer Maschine zum Abbinden einer gefüllten Wursthaut mit den kennzeichnenen Eigenschaften gemäss dem Anspruch 1.

Dank der Auslegung, dass die Spule, welche die Abbindeschnur aufnimmt, koaxial mit der Symmetrieachse der gefüllten Wursthaut angeordnet ist, welch letztere die Spule in deren Mitte durchquert, und deren Innendurchmesser im Wesentlichen nur dadurch begrenzt ist, dass die volle Wursthaut mit entsprechendem Durchmesser durchtreten können muss, aber nicht in ihrer achsialen Länge begrenzt ist, wobei die einzige Begrenzung durch die Probleme im Zusammenhang mit der Beschleunigung und der Abbremsung der Massen gegeben ist, jedoch nicht durch Unwuchtprobleme. Die Schnurspule rotiert konzentrisch um ihre Symmetrieachse un lässt daher keine Unwuchtkräfte entstehen, wie dies bei den bisherigen Spulen der bekannten automatischen Abbindemaschinen gemäss dem Stand der Technik der Fall war, welche um die Längsachse der Wursthaut kreisten. Daher kann die auf der Spule aufgewikkelte Schnurlänge um ein Vielfaches (in der Grössenordnung einer 10-fachen Verlängerung) verlängert werden, was bedeutet, dass die Maschine viel weniger häufig für den Spulenwechsel abgestellt werden muss. Darüber hinaus erlaubt das Fehlen von auf die Abbindemaschine einwirkenden Unwuchtkräften eine Steigerung der Arbeitsgeschwindigkeit um mindestens 20 bis 50 %, ohne dass eine Ueberbelastung sowohl der Bindeschnur als auch der Wursthaut entsteht. Die Maschine gemäss der vorliegenden Erfindung erzeugt, dank der vollständigen Beherrschung der Spannungsverhältnisse in der Schnur, Abbindepunkte in der eingefüllten Wurst von gleichbleibender und kontrollierter Qualität, und zwar unabhängig vom Gewicht der verwendeten Schnurspule, das sich im Lauf der Zeit verändert.

In den Unteransprüchen sind weitere kennzeichnende Eigenschaften der erfindungsgemässen Maschine beschrieben, die im Folgenden unter Bezugnahme auf ein Ausführungsbeispiel näher erklärt sind, und die alle zur weiteren Verbesserung der Arbeitsbedingungen dienen, insbesondere durch Verbesserung der gleichbleibenden Wirkungsweise der Elemente der Maschine.

Die vorliegende Erfindung wird im Folgenden anhand: eines praktischen Ausführungsbeispiels unter Bezugnahme auf die entsprechenden Abbildungen näher beschrieben. Es zeigen die:
- Fig. 1: eine schematische Ansicht der erfindungsgemässen Maschine von oben,
- Fig. 2: die Anordnung gemäss Fig. 1 in einer Seitenansicht,
- Fig. 3: ein Konstruktionsdetail, im Speziellen des Hebels, der die Spule auf dem Spulenhalter festhält, während beide zusammen rotieren,
- Fig. 4: ein Konstruktionsdetail, im Speziellen des schwenkbaren Hebels, der die Schnur in zu den Einlass-Backen gemäss der Fig. 6 führt,
- Fig. 5: das Konstruktionsdetail, das die Klemmzange am Ausgang mit V-förmigen Klemmbacken zeigt,
- Fig. 6: das Konstruktionsdetail, das die Klemmzange am Eingang mit V-förmigen Klemmbacken zeigt,
- Fig. 7: ein weiteres Konstruktionsdetail des Sputenhalters, auf dem die Schnur-Spule aufgesteckt ist;
- Fig. 8: ein Detail der Fig. 7, das aufzeigt, wie die Schnur-Spule auf den Spulen halter aufgesteckt werden kann,
- Fig. 9: ein Detail in vergrösserter Darstellung der auf dem Flansch 3 angebrachten Spulenbremse,
- Fig. 10: eine schematische Darstellung der erfindungsgemässen Maschine im Betriebszustand, und
- Fig. 11: ein Detail, das die Art der Abbindung zeigt, die auf der erfindungsgemässen Maschine ausgeführt wird.

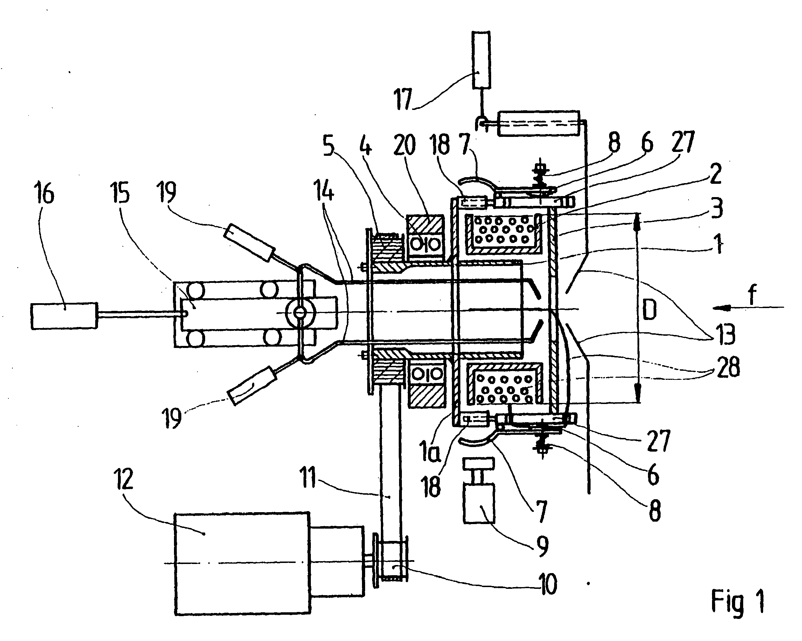

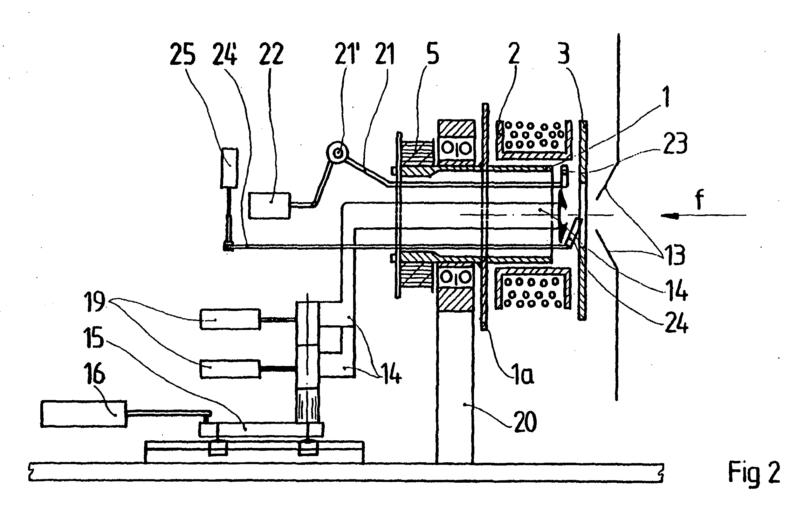

Die Figuren 1 und 2 zeigen den prinzipiellen Aufbau der Maschine in zwei verschiedenen Ansichten.

Mit dem Bezugszeichen 1 ist ein Spulenhalter bzw. Schiffchen angedeutet, der in einem Wälzlager 4 gelagert ist, das in einem Träger 20 eingebaut ist. Der Spulenhalter 1 trägt einen Flansch 1a. Auf dem freien Nabenende des Spulenhalters 1 wird eine Schnur-Spule 2 aufgesteckt, die vorzugsweise aus einem leichten Material besteht, beispielsweise aus Kunststoff, auf der die Schnur 28 in Windungen aufgewunden ist, die zum Abbinden der gefüllten Würste oder ähnlichem dient.

Der Spulenhalter 1 wird zusammen mit der Schnur-Spule 2 mittels eines Servomotors 12 und eines Zahnriemens 11 in Drehung versetzt, der mit einer Riemenscheibe im Eingriff steht, die mit dem Spulenhalter 1 eine Einheit bildet. Der bürstenlose Servomotor mit der Antriebsscheibe 10 wird mit Hilfe von (nicht dargestellten) Mitteln in solcher Weise gesteuert, dass er dem Spulenhalter eine genau festgelegte Anzahl (normalerweise 2 oder 3) Umdrehungen erteilt, die eine entsprechenden Anzahl Windungen der Schnur um die Wursthaut erzeugen, wie dies im Folgenden näher erklärt wird.

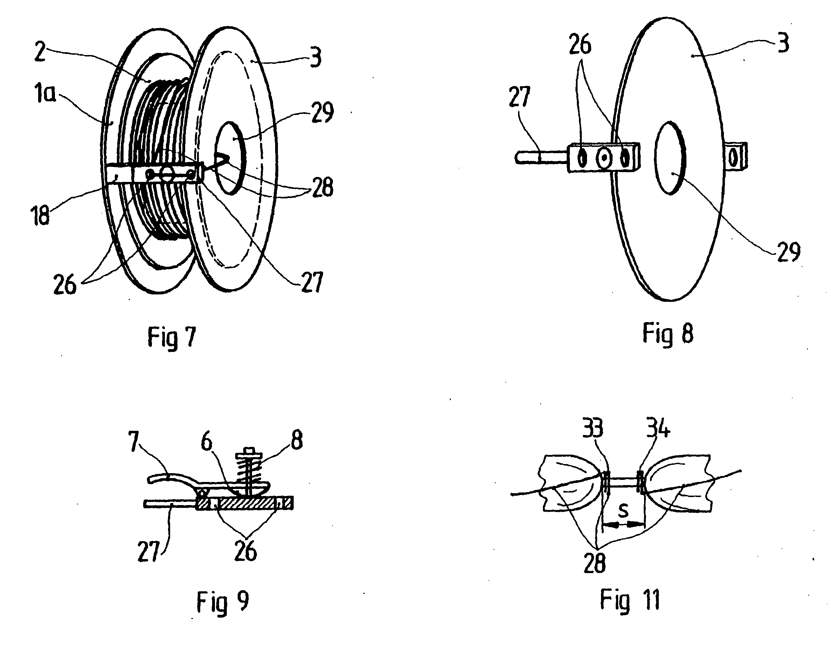

Ein Flansch 3 mit einer Oeffnung 29 in seiner Mitte (vgl. auch die Fig. 7 und 8) ist über zwei ausgebohrte Stützen 18, in die zwei Stifte 27 (Fig. 8) eingesteckt sind, mit dem Flansch 1a des Spulenhalters 1 so verbunden, dass der Flansch 3 im montierten Zustand zusammen mit dem Spulenhalter 1 und dessen Flansch 1a eine Einheit bildet. Der Flansch 3 kann jedoch vom Flansch 1a gelöst werden, wenn die Stifte 27 nach Lösen von nicht gezeigten Befestigungselementen aus den Stützen 18 herausgezogen werden, damit eine Schnur-Spule 2 auf die Nabe des Spulenhalters 1 aufgesteckt werden kann.

In mindestens einem der Stifte 27 (von denen normalerweise mindestens 2 vorgesehen sind, die einander auf dem Flansch diametral gegenüberstehend angebracht sind, um eine richtige Befestigung des Flansches 3 gegenüber dem Flansch 1a zu gewährleisten) sind zwei Durchlass-Oeffnungen 26 (vgl. auch die Figuren 7, 8 und 9) vorgesehen, durch deren erste die Schnur 28 von der Oberfläche der Spule her, auf der sie aufgewickelt ist, durchgeführt wird, und von wo sie über eine kurze Strecke achsial umgelenkt und sodann an einem Punkt oberhalb (bezüglich der Spule 2) des Flansches 3 radial durch die zweite Oeffnung 26 umgelenkt wird. Die Schnur 28 (vgl. die Fig. 7) wird also gegen die Mitte des Sputenhalters 1 durch die Oeffnung 29 in der Mitte des Flansches 3 geführt.

Längs des Weges zwischen den beiden Durchgangsöffnungen 26 wird die Schnur mittels einer einstellbaren Bremsvorrichtung je nach der für das Abbinden des Produktes erforderlichen Spannung abgebremst. Die Bremsvorrichtung besteht aus einem Bremsteller 6 (vgl. auch die Fig. 9, die auch dessen Einzelheiten darstellt), der an einem schwenkbaren Hebel 7 befestigt ist und mittels einer Druckfeder 8 gegen den Stift 27 gedrückt wird. Es handelt sich dabei um eine Reibungs-Bremse, die die Schnur 28 zwischen dem Teller 6 und dem Stift 27 klemmt. Die genannte Bremsvorrichtung bezweckt ein Bremsen der Schnur während des Abbindevorgangs, während welchem der Spulenhalter 1 und die Spule 2 rotieren und die Schnurwindungen auf die Wursthaut ablegen. Sobald der Abbindevorgang mittels Umwindungen beendet ist und die eingefüllte Wurst in einem Zuge um die gewünschte Länge bzw. um die gewünschte Portionengrösse der zu produzierenden Wurst vorgeschoben wird, wobei ein Stück Schnur als Verbindung mitgeschleppt wird, darf diese Verbindungs-Schnur keiner starken Spannung ausgesetzt sein, weil sonst die Gefahr besteht, dass sich die Wurst infolge der Anspannung der Verbindungs-Schnur in Bananenform verkrümmt. Dies ist (meistens) unerwünscht. Daher muss während des Vorschubes der Wursthaut zwischen einer Wurst und der nächsten, der bei stillstehendem Spulenhalter erfolgt, die Bremse gelöst sein: zu diesem Zweck dient ein stillstehender Kolben 9, der auf das Ende des Hebels 7 drückt, das dem Ende Hebelende gegenüberliegt, an dem sich die Bremsscheibe 6 befindet, wobei die Federkraft der Feder 8 überwunden und die Schnur 28 von der Klemmung der Bremse befreit wird.

Dabei ist klar ersichtlich, dass ein einziges, mit dem Schnurführungs-Stift 27 zusammenwirkendes Bremssystem ausreicht, um das gewünschte Resultat zu erreichen. Aus der Fig. 1 ist jedoch ersichtlich, dass zwei einander ähnliche Bremssysteme vorgesehen sind, die einander gegenüberliegend auf den Flanschen 1a und 3 des Spulenhalters angeordnet sind. Dies hält jedoch lediglich die Konstruktion symmetrisch bzw. ausgewogen, wodurch sich Unwuchten während der Rotation des Spulenhalters vermeiden lassen. Dabei ist nichts zuverlässiger, als zwei Bremsvorrichtungen vorzusehen, die vorteilhafterweise auf zwei verschiedene Schnur-Typen bzw. zwei Abbinde-Spannungen eingestellt werden, womit auf der gleichen Maschine zwei verschiedene Wusttypen abgefüllt werden können, ohne dass die Maschine jedesmal neu eingestellt zu werden braucht.

Zum Einstellen verschiedener Abbinde-Bedingungen genügt es dann, von einem Bremssystem auf das andere zu wechseln. Dabei ist allerdings klar, dass dieses Merkmal der Anordnung von zwei (oder mehr) Bremssystemen am Umfang der Flansche 1a und 3 kein erfindungsgemässes Kennzeichen der vorliegenden Erfindung darstellt, die an sich mit einem einzigen SchnurFührer und mit einem einzigen Bremssystem auskommt.

Zur Gewährleistung einer sicheren Mitnahme der Spule 2 durch den Spulenhalter 1 während des Umwindens der Wursthaut mit der Schnur 28, und um zu vermeiden, dass die Schnur während der erwähnten Vorschubphase der Wursthaut während des Einfüllvorganges von einer abgebundenen Wurst zur damit verbundenen nächsten Wurst einer zu starken Anspannung unterworfen wird, werden weitere Mittel zur Bremsung bzw. zur teilweisen Blockierung der Schnur-Spule 2 auf dem Spulenhalter 1 vorgesehen.

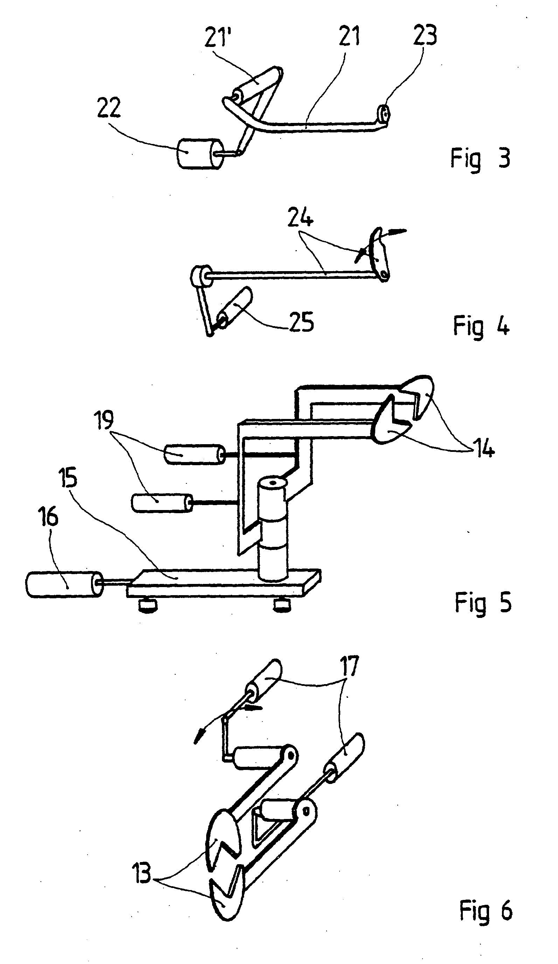

Ein Beispiel solcher Mittel, wie sie in der Fig. 2 und davon verschieden in der Fig. 3 dargestellt sind, bestehen aus einem Hebel 21 der sich in der Bohrung des Spulenhalters 1 erstreckt und an seinem vorderen Ende, entsprechend dem Eintrittspunkt der Wursthaut in die Vorrichtung, der in den Figuren 1 und 2 mit dem Pfeil f bezeichnet ist, eine Rolle 23 trägt, deren Drehachse parallel zur Drehachse des Spulenhalters verläuft. Der Hebel 21, der seinen Drehpunkt in einem Abstützpunkt 21' hat, wird mittels eines Betätigungs-Kolbens 22 (beispielsweise ein Pneumatik-Kolben) betätigt und drückt aus seiner Bohrung den (in Vorschubrichtung der Wursthaut gesehen) vorderen Rand der Spule 2 in solcher Weise nach aussen, dass er besser am sich drehenden Spulenhalter 1 auf der der Bohrung gegenüberliegenden Seite festgehalten bleibt. Dabei ist daran zu erinnern, dass zum Abwickeln der Schnur 28 von der Spule durch die Schnurfühung durch die Durchgangsöffnungen 26 durch den mit dem Spulenhalter 1 fest verbundenen Stift 27, sich notwendigerweise die Spule 2 gegenüber dem Spulenhalter 1 drehen muss, wobei die zwischen dem Spulenhalter 1 und der Spule 2 herrschende Reibung zusammen mit der Bremswirkung des Bremssystems 7 bis 9 mithilft, eine genügende Spannung der Schnur während des Anlegens der Windungen der Umwicklung zu bestimmen. Hingegen ist die Spannung, wie bereits erwähnt, während des Vorschubes beim Einfüllen einer nachfolgenden Wurst minimal zu halten, wobei während dieser Phase auch die Reibung zwischen dem Spulenhalter 1 und der Spule 2 möglichst reduziert werden sollte, was durch Entlasten des Druckes des Hebels 21 auf die Spule 2 erreicht wird (d.h. durch Entlasten des Betätigungs-Kolbens 22).

Gemäss einer weiteren bevorzugten Ausführungsform der vorliegenden Erfindung besteht die Vorrichtung zum Einengen der gefüllten Wursthaut am Abbindepunkt und damit zum Zusammendrücken der gefüllten Wursthaut aus zwei Paaren von Zangen-Hebeln 13, 14 (deren Einzelheiten auch in den Figuren 5 und 6 dargestellt sind).

Die vordere Zange 13 (Fig. 6) ist als die vordere bezeichnet, da sie sich, in der mit dem Pfeil f angedeuteten Vorschubrichtung der Wurst, vor der Abbindestelle befindet. Sie steht bezüglich der Vorschubrichtung im Raum fest und die Wurst wird beim Schliessen des Zangenkopfes, das mittels zweier Betätigungskolben 17 erfolgt, zwischen den beiden V-förmigen Elementen senkrecht zur Vorschubrichtung zusammengedrückt. Das Zudrücken der Zange 13 engt die gefüllte Wursthaut an einer Stelle unmittelbar vor dem Abbindepunkt ein.

Die hintere Zange 14 (Fig. 5) ist als solche bezeichnet, da sie, in Vorschubrichtung gesehen, nach dem Abbindepunkt angeordnet ist: Diese Zange besteht aus zwei langen Armen, die sich achsial durch den Spulenhalter 1 erstrecken, und die an einem vertikalen Stift befestigt sind. Die Betätigungskolben 19 besorgen das Schliessen der Zange 14 in einer horizontalen Ebene, wobei die Wursthaut zwischen den beiden V-förmigen Flächen, die jenen der Zange 13 gleichen, eingeengt wird. Der Mechanismus der Zange 14 ist sodann vorzugsweise auf einem Wagen 15 montiert, auf welchem die Zange 14 über eine kurze Strecke achsial verschoben werden kann. Diese mittels eines Betätigungskolbens 16 durchgeführte Verschiebung wird ausgeführt, wenn die Schnurwindungen angelegt und die Zangen 13 und 14 noch geschlossen sind, so dass eine achsiale Verschiebung der gefüllten Wursthaut erfolgt und die Voraussetzungen geschaffen werden, in einer zweiten Abbinde-Operation die zweiten Windungen der Schnur 28 um die Wursthaut anzulegen.

In der Fig. 4 ist eine weitere Einzelheit der erfindungsgemässen Vorrichtung dargestellt, die in montiertem Zustand auch in der Fig. 2 gezeigt ist. Es handelt sich dabei um einen schwenkbaren Hebel 24, dessen vorderes Ende zwischen der vorderen Zange 13 und der hinteren Zange 14 angeordnet ist und eine seitliche Schwenkbewegung ausführt. Der schwenkbare Hebel 24, der mittels eines Betätigungskolbens 25 eine Drehbewegung um eine Achse 24' ausführt, dient dazu, die Schnur im Bereich der vorderen Zange 13 zu halten, nachdem die ersten Abbinde-Windungen angelegt worden sind und währenddem sich die hintere Zange 14 mit Hilfe des Wagens 15 zurückverschiebt. Dieser Hebel hat also die Aufgabe, die Schnur im Bereich der vorderen Zange 13 zu halten (und dabei zu verhindern, dass sie sich zu weit hinter bei den soeben angelegten Abbinde-Windungen befindet), so dass eine zweite Abbindung 34 in einem Abstand S von der ersten Abbindung 33 (vgl. auch die Fig. 11) sicher und eindeutig von der ersten getrennt angelegt wird. Die beiden getrennt voneinander angeordneten Abbindungen sind wichtig, damit die Würste nachher am verengten Abschnitt zwischen den zwei Abbindungen getrennt werden können, ohne dass Gefahr besteht, dass das eingefüllte Material austritt.

Das Aggregat, bestehend aus der Schnur-Spule 2, dem rotierenden Spulenhalter 1 mit dem Flansch 1a und dem daran mittels der Stützen 18 (von denen nur eine sichtbar ist) befestigten Flansch 3 und den Stiften 27, in denen die Durchgangsbohrungen 26 vorgesehen sind, und auf weichen die Schnurbremsen 6, 7, 8 montiert sind, ist in der Fig. 7 separat dargestellt, während die Fig. 8 den vom Flansch 1a gelösten Flansch 3 zeigt, womit besser erklärt werden kann, auf welche Art der letztere am Flansch 1a befestigt ist.

Gemäss einer weiteren bevorzugten Ausführungsform der vorliegenden Erfindung richtet sich der Innendurchmesser der Bohrung der Spule 2, welche die Schnur aufnimmt, nach dem grössten Durchmessers der gefüllten Wursthaut, während der Ausendurchmesser D der Spule 2 mindestens doppelt so gross ist wie der Wurst-Durchmesser. Dies bedeutet, dass der Durchmesser der Spule 2, und damit auch jener des Spulenhalters 1, vorzugsweise dem Durchmesser der zu fabrizierenden Würste angepasst wird, damit das verfügbare Nutzvolumen zum Aufwickeln der Schnur auf der Spule maximal ausgenützt werden kann. Für die Produktion dünnerer Würste können daher Spulen 2 von geringerem Bohrungs-Durchmesser verwendet werden.

Die vorliegende Erfindung bietet als einen ihrer hauptsächlichen Vorteile insbesondere die Möglichkeit, mit Spulen 2 von grosser Füllungskapazität zu arbeiten, so dass die Häufigkeit der Maschinenstillstände für Spulenwechsel wesentlich vermindert wird. Gemäss einer bevorzugten Ausführungsform der erfindungsgemässen Maschine beträgt der Aussendurchmesser der Spule 2 mehr als 15 cm, das heisst dass (im Vergleich zu den heute auf Maschinen gemäss dem Stand der Technik verwendeten Schnur-Spulen, die einen Aussendurchmesser von höchstens etwa 10 cm aufweisen), die unterbruchsfreie Betriebsdauer, bevor der nächste Spulenwechsel notwendig wird, ganz wesentlich verlängert werden kann.

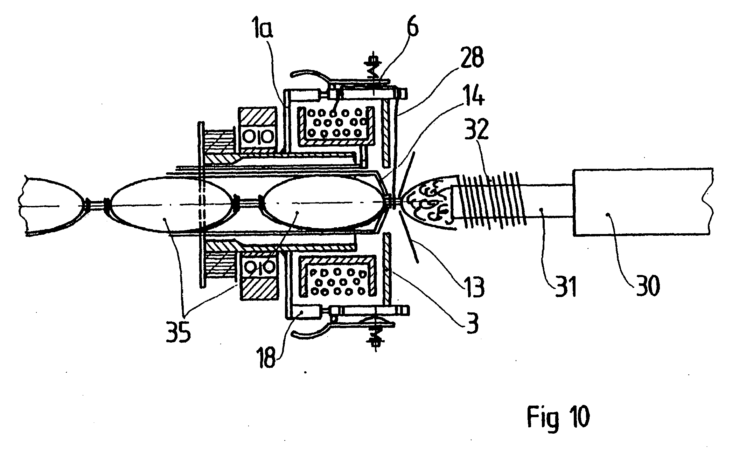

In der Fig. 10 ist sodann die Funktionsweise der erfindungsgemässen Maschine im Betrieb schematisch dargestellt. Zu erkennen ist die Einfüllvorrichtung 30, auf deren Einfüllrohr 31 eine Wursthaut 32 "Handharmonika-artig" aufgesteckt ist. Die gesteuerte Drehbewegung des Spulenhalters 1, der die Schnur-Spule 2 trägt, erlaubt bei geschlossenen Zangen 13 und 14 und mit Hilfe des Bremssystems 6, 7 und 8 das Aufbringen einer gewünschten Anzahl von Schnur-Windungen (die durch die Programmierung des bürstenlosen Servomotors 12 bestimmt ist) auf der eingeengten Wursthaut, wobei eine Einschnürung gebildet wird. Die Abbinde-Windungen werden präzis auf der Wursthaut "angelegt", ohne dass eine Relativbewegung zwischen Schnur und Wursthaut erfolgen kann, so dass keine Gefahr besteht, dass die Wursthaut 32 dabei beschädigt würde. Wenn diese erste Abbindung ausgeführt ist, und wenn man mit Doppel-Abbindung arbeiten will (was nicht immer erforderlich ist), kann sich der Wagen 15 mit der darauf angebrachten hinteren Zange 14 über eine Strecke S (vgl. Fig. 11) zurückverschieben, während die Zangen 13 und 14 noch geschlossen sind und nachdem der Hebel 24 in seine Arbeitsstellung geschwenkt worden ist. Dieser Hebel 24 hält die Schnur 28 wie bereits erwähnt im Bereich der vorderen Zange 13. Sodann wird eine zweite Abbindung ausgeführt, wobei der Spulenhalter 1 mit der Schnur-Spule 2 wiederum eine vorausbestimmte Anzahl Drehungen ausführt. Daraufhin öffnen sich die Zangen 13 und 14 nach Betätigung der Kolben 17 und 19, und der Hebel 24 wird in seine Ruhelage zurückgeschwenkt. Auch der Hebel 21 kehrt in seine Ruhelage zurück, während der Betätigungskolben 9 den Hebel der Bremse löst, der in seiner Stellung festgehalten war. Die Schnur 28 wird somit entspannt (bzw. steht nur noch unter einer reduzierten Spannung), und die Einfüllvorrichtung 30 kann das Füllen der Wursthaut 32 fortsetzen, die sich frei vorschiebt und dabei die entspannte Schnur mitzieht, wobei diese keinerlei Zugkraft auf die im Entstehen begriffene Wurst ausübt. Sobald die Länge der neu eingefüllten Wurst den gewünschten Wert erreicht hat, wird die Einfüllvorrichtung gestoppt, die Zangen 13 und 14 schliessen sich und engen die gefüllte Wursthaut ein und schaffen damit die Voraussetzungen für die erste Abbindung. Der Hebel 21 kehrt zurück, um die Spule 2 auf dem Spulenhalter 1 festzuhalten, der Motor 12 versetzt das Aggregat in Drehung, und eine neue Abbindung wird auf der Wursthaut angebracht. Dieser Ablauf wiederholt stets in dieser Weise.

Die Produktionsleistung der erfindungsgemässen Maschine ist viel höher als jene der bisher bekannten Abbinde-Maschinen, die den Nachteil grosser rotierender Unwucht-Massen aufweisen, und erlaubt die Verwendung wesentlich (bis 10 mal) schwererer Schnur-Spulen als sie auf den heute bekannten Maschinen verwendet werden können. Dies ergibt insgesamt bedeutende wirtschaftliche Einsparungen, verbunden mit vereinfachter Wartung nur schon wegen des Fehlens übermässiger dynamischer Kräfte. Die erfindungsgemässe Maschine kann mit Naturdärmen oder mit künstlichen Wursthäuten arbeiten, während die Schnur, bzw. der Bindfaden, trocken oder vor zugsweise feucht verwendet werden kann. Bei Verwendung angefeuchteter Schnur entstehen solidere Abbindungen. Die Maschine kann überdies auch mit einem unabhängigen Vorschub-System für das Einfüllen ausgerüstet werden.

## Patentansprüche

1. Maschine zum automatischen Abbinden einer in eine Wurshaut gefüllten Fleischmasse oder ähnlicher Produkte mittels einer Schnur (28), mit einer Spule (2), auf der die Abbindeschnur (28) aufgewunden ist, einem Mechanismus zum Einengen der gefüllten Wursthaut am Abbindepunkt und um die Einschnürung auszubilden, einem Mechanismus zum Anlegen von mindestens einer Schnurwindung am Abbindepunkt während die gefüllte Wursthaut stillsteht, wobei die Spule (2), welche die Abbindeschnur (28) trägt, koaxial mit der Symmetrieachse der gefüllten Wursthaut angeordnet ist und in ihrer Mitte mit einer achsialen Durchgangsöffnung versehen ist, deren Durchmesser genügend gross ist, damit die gefüllte Wursthaut durchtreten kann, und wobei die Spule (2) auf einem Spulenhalter (1) aufgesteckt ist, der um seine Achse drehbar ist,
**dadurch gekennzeichnet, dass**
die Spule (2) in geeigneter Weise gebremst auf den Spulenhalter (1) aufgesteckt ist, und dass
sie mit Mitteln zur Führung (18, 26, 27) und zur Bremsung (6, 7, 8) der Schnur (28) versehen ist, mit deren Hilfe die während der Drehung der Schnurspule (2) um die Wursthaut angelegten Windungen (33, 34) der Schnur (28) einer konstanten und kontrollierten Spannung unterworfen sind, wobei die Mittel zur Führung der Schnur (28), mit denen der drehbare Spulenhalter (1) ausgerüstet ist, aus zwei Flanschen (1a, 3) und einem Schnurführer (18, 26, 27) bestehen, wobei letzterer an einem äussersten Punkt des Aussendurchmessers der Spule (2) an den Flanschen (1a, 3) befestigt ist, und dass die Mittel zum Bremsen aus einer Bremse mit Federklemmung bestehen, welche auf dem Schnurführer angebracht sind und die Schnur (28) während der ganzen Phase der Drehung der Spule (2) und des Anlegens der Windungen der Schnur (28) auf der Wursthaut bremst, und dass ein Organ (9) zum mindestens teilweisen Lösen der Bremse (6, 7, 8) während der Phase des Stillstandes der Spule (2) vorgesehen ist, was der Schnur (28) erlaubt, den achsialen Verschiebungen der gefüllten Wurst unter reduzierter Spannung zu folgen.

2. Maschine zum Abbinden einer gefüllten Wursthaut gemäss dem Anspruch 1,
**dadurch gekennzeichnet, dass**
darüber hinaus Mittel vorgesehen sind zum Bremsen bzw. zum teilweisen Blockieren der Schnurspule (2) auf dem drehbaren Spulenhalter (1) während der Phase, während welcher der Spulenhalter (1) rotiert, bestehend aus einem Hebel (21), der radial vom Inneren der Durchgangsöffnung heraus an einem Punkt gegen die Spule (2) angedrückt wird, damit diese besser auf dem sich drehenden Spulenhalter (1) auf der der Durchgansöffnung gegenüberliegenden Seite festgehalten wird, und dass die völlige Mitnahme der Spule (2) durch den Spulenhalter (1) gewährleistet ist.

3. Maschine zum Abbinden einer gefüllten Wursthaut gemäss dem Anspruch 1,
**dadurch gekennzeichnet, dass**
der Mechanismus zum Einengen der gefüllten Wursthaut am Abbindepunkt und zum Ausbilden der eingeschnürten Form der gefüllten Wursthaut aus zwei Hebelpaaren (13, 14) besteht, von denen jedes eine Zange (13, 14) mit V-förmigen Backen bildet, welche die gefüllte Wursthaut einschnüren, wenn sie sich schliessen, und dass die Schnur (28) am Abbindepunkt zwischen den beiden geschlossenen Zangen (13, 14) um die Wursthaut gewunden wird.

4. Maschine zum Abbinden einer gefüllten Wursthaut gemäss dem Anspruch 3,
**dadurch gekennzeichnet, dass**
die Zange (14) nach dem Abbindepunkt auf einem Wagen (15) montiert ist, der eine Verschiebungsbewegung in der Richtung der Symmetrieachse der gefüllten Wursthaut ausführen kann, wobei diese Bewegung ausgeführt wird, wenn die Windungen der Schnur (28) angelegt und während die Zangen (13, 14) noch geschlossen sind, so dass eine entsprechende Längsverschiebund der gefüllten Wursthaut erfolgt und somit die Voraussetzungen geschaffen werden, dass in einer nachfolgenden Abbindeoperation die zweiten Abbinde-windungen der Schnur (28) auf der Wursthaut angelegt werden können.

5. Maschine zum Abbinden einer gefüllten Wursthaut gemäss dem Anspruch 5,
**dadurch gekennzeichnet, dass**
zwei der Schnurführer (18, 26, 27), von denen jeder mit einer Schnurbremse versehen ist, an einander diametral gegenüberliegenden Stellen auf den Flanschen (1a, 3) angeordnet sind, wobei jeweils nur einer der Schnurführer (18, 26, 27) und nur die entsprechende Bremse (6, 7, 8) in Betrieb ist, während die andere als Reserve-Schnurführer und als entsprechende Reserve-Bremse sowie als Unwuchtausgleich dienen.

6. Maschine zum Abbinden einer gefüllten Wursthaut gemäss dem Anspruch 1,
**dadurch gekennzeichnet, dass**
der Antriebsmotor (12) für den drehbaren Spulenhalter (1) ein bürstenloser Servomotor ist, der den Spulenhalter (1) genau positionieren kann und der so gesteuert werden kann, dass er dem Spulenhalter (1) bei jedem Arbeitszyklus eine vorbestimmte Anzahl Umdrehungen erteilt, die der Anzahl der Abbindewindungen der Schnur (28) an jeder Abbindestelle auf der gefüllten Wursthaut entspricht.

7. Maschine zum Abbinden einer gefüllten Wursthaut gemäss dem Anspruch 1,
**dadurch gekennzeichnet, dass**
der Durchmesser der Durchgangsöffnung in der Spule (29), auf der die Schnur (28) aufgewunden ist, in Abhängigkeit vom grössten Durchmesser der gefüllten Wursthaut gewählt wird, und dass der Aussendurchmesser der Spule (2) mindestens doppelt so gross ist wie der Durchmesser der gefüllten Wursthaut.

8. Maschine zum Abbinden einer gefüllten Wursthaut gemäss dem Anspruch 7,
**dadurch gekennzeichnet, dass**
der Aussendurchmesser (D) der Spule (2) grösser als 15 cm ist.

9. Maschine zum Abbinden einer gefüllten Wursthaut gemäss dem Anspruch 1,
**dadurch gekennzeichnet, dass**
die Spule (2), auf der die Schnur (28) aufgewunden ist, aus einem leichten Material hergestellt ist, vorzugsweise aus einem Kunststoff.

## Claims

1. Machine for the automatic tying-off of a meat composition, or of a similar product, filled into a sausage skin, by means of a cord (28), comprising a bobbin(2) on which the tying-off cord (28) is stored, a mechanism for the narrowing of the filled sausage skin at the point of tying-off in order to form the constriction, and a mechanism for the application of at least one cord turn at the tying-off point while the filled sausage skin is at a standstill, in which arrangement the bobbin (2) carrying the tying-off cord (28) is arranged coaxially with the axis of symmetry of the filled sausage skin, and at its centre is provided with an axially extending throughput opening, the diameter of which is chosen large enough to permit passage of the filled sausage skin, and where the bobbin (2) is supported on a bobbin holder (1), which can rotate about its axis,
**characterised in that**
the bobbin (2) is placed onto the bobbin holder (1) braked in suitable manner, and is provided with means for guiding (18, 26, 27) and for braking (6, 7, 8) the cord (28), with the help of which the turns (33, 34) of the cord (28) applied around the sausage skin while the cord bobbin (2) rotates are subject to a constant and controlled tension , where the means for guiding the cord (28), with which the rotatable bobbin holder (1) is equipped, consist of two flanges (1a, 3) and a cord guide (18, 26, 27), the later being secured to an outermost point of the outside diameter of the bobbin (2) at the flanges (1a, 3), and of a cord guide (18, 26, 27), the later being secured to an outermost point of the outside diameter of the bobbin (2) at the flanges (1 a, 3), and that the means for braking consist of a spring clamping brake element arranged on the cord guide, braking the cord (28) during the entire phase of rotation of the bobbin (2) and of the application of the turns of the cord (28) on the sausage skin, and **in that** an member (9) is provided for an at least partial release of the brake (6, 7, 8) during the phase during which the bobbin (2) is at a standstill, in such a manner that the cord (2) is able to follow the axial displacements of the filled sausage under reduced tension.

2. Machine for the tying-off of a filled sausage skin in accordance with claim 1,
**characterised in that**
means are additionally provided for the braking or for the at least partial blocking of the cord bobbin (2) on the rotatable bobbin holder (1) during the phase in which the bobbin holder (1) rotates comprising a lever (21) which is pressed radially from the interior of the passage opening against the bobbin (2) at one point so that the latter is better held on the rotating bobbin holder (1) at the side opposite to the passage opening and so that the full driving of the bobbin (2) by the bobbin holder (1) is ensured.

3. Machine for the tying-off of a filled sausage skin in accordance with claim 1,
**characterised in that**
the mechanism for the narrowing of the filled sausage skin at the point of tying-off and for the forming of the constricted shape of the filled sausage skin consists of two lever pairs (13. 14) of which each forms a calliper (13, 14) with V-shaped jaws which constrict the filled sausage skin when they close, and **in that** the cord (28) is wound at the tying-off point around the sausage skin between the two closed callipers (13. 14).

4. Machine for the tying-off of a filled sausage skin in accordance with claim 3,
**characterised in that**
the calliper (14) is mounted after the tying-off point on a carriage (15) which can execute a displacement movement in the direction of the axis of symmetry of the filled sausage skin with this movement being executed when the turns of cord (28) are applied and while the callipers (13,14) are still closed so that a corresponding longitudinal displacement of the filled sausage skin takes place and thus the preconditions are established for the second tying-off turns of the cord (28) to be able to be applied to the sausage skin in a subsequent tying-off operation.

5. Machine for the tying-off of a filled sausage skin in accordance with claim 1,
**characterised in that**
two of the cord guides (18. 26, 27) of which each is provided with a cord brake are arranged at mutually diametrically opposite positions on the flanges (1a. 3), with in each case only one of the cord guides (18, 26,27) and only the corresponding brake (6, 7, 8) being in operation while the others serve as a reserve cord guide and as a corresponding reserve brake and also as imbalance compensation.

6. Machine for the tying-off of a filled sausage skin in accordance with claim 1,
**characterised in that**
the drive motor (12) for the rotatable bobbin holder (1) is a brushless servo-motor and can accurately position the bobbin holder (1) and can be so controlled that it imparts a predetermined number of turns to the bobbin holder (1) for each working cycle, with the predetermined number of turns corresponding to the number of tying-off turns of the cord (28) at each tying-off point on the filled sausage skin.

7. Machine for the tying-off of a filled sausage skin in accordance with claim 1,
**characterised in that**
the diameter of the passage opening in the bobbin (2) onto which the cord (28) is wound is selected in dependence on the largest diameter of the filled sausage skin and **in that** the outer diameter of the bobbin (2) is at least twice as large as the diameter of the filled sausage skin.

8. Machine for the tying-off of a filled sausage skin in accordance with claim 7
**characterised in that**
the outer diameter (D) of the bobbin (2) is greater than 15 cm.

9. Machine for the tying-off of a filled sausage skin in accordance with claim 1,
**characterised in that**
the bobbin (2) on which the cord (28) is wound is manufactured of a light-weight material preferably of a plastic.

## Revendications

1. Machine à lier automatiquement de la chair ou des produits analogues embossés dans un boyau au moyen d'un lien (28) comprenant une bobine (2) de laquelle le lien (28) se déroule, un mécanisme destiné à rétrécir le boyau embossé au point à lier et à constituer le rétrécissement, d'un mécanisme pour appliquer au moins une spire de lien au point à lier pendant que le boyau embossé est au repos,
la bobine (2) qui porte le lien (28) étant disposée coaxialement à l'axe de symétrie du boyau embossé et étant munie en son milieu d'une ouverture axiale de passage dont le diamètre est suffisamment grand pour que le boyau embossé puisse passer et la bobine (2) du lien étant enfilée sur un porte-bobine (1) qui est monté tourné par rapport à son axe,
**caractérisée en ce que** la bobine (2) est enfilée en étant freinée d'une manière appropriée sur le porte-bobine (1), et
**en ce qu'**elle est munie de moyens de guidage (18, 26, 27) et de freinage (6, 7, 8) du lien (28), à l'aide desquels les spires (33, 34) du lien (28) appliquées pendant la rotation de la bobine (2) autour du boyau sont soumises à une tension constante et contrôlée,
les moyens de guidage du lien (28) dont le porte-bobine (1) tournant étant équipé, sont constitués de deux joues (1a, 3) et d'un guide lien (18, 26, 27), ce dernier étant fixé en un point le plus extérieur du diamètre extérieur de la bobine (2) aux joues (1a, 3), et
**en ce que** les moyens de freinage sont constitués d'un frein à cramponnage élastique, ces moyens étant mis sur le guide de lien et le lien (28) freinant pendant toute la phase de rotation de la bobine (2) et de l'application des spires de la bobine (28) sur le boyau, et
**en ce qu'**il est prévu un organe (9) de desserrage au moins partiel du frein (6, 7, 8) pendant la phase d'arrêt de la bobine (2), ce qui permet au lien (28) de suivre avec une tension réduite les coulissements axiaux de la saucisse embossée.

2. Machine à lier un boyau embossé suivant la revendication 1, **caractérisée en ce qu'**il est prévu en outre des moyens de freinage et de blocage partiel de la bobine (2) de lien sur le porte-bobine (1) tournant pendant la phase pendant laquelle le porte-bobine (1) tourne, ces moyens étant constitués d'un levier (21) qui est appliqué radialement de l'intérieur de l'ouverture de passage en un point sur la bobine (2) afin que celle-ci soit mieux maintenue du côté opposé à l'ouverture de passage sur le porte bobine (1) tournant et **en ce que** l'entraînement complet de la bobine (2) est assuré par le porte-bobine (1).

3. Machine à lier un boyau embossé suivant la revendication 1, **caractérisée en ce que** le mécanisme de rétrécissement du boyau embossé au point où s'applique le lien et de constitution de la forme rétrécie du boyau embossé est constitué de deux paires (13, 14) de levier, dont chacune forme une pince (13, 14) à mâchoires en forme de V qui rétrécissent le boyau embossé lorsqu'elles se ferment et **en ce que** le lien (28) est au point d'application du lien enroulé autour du boyau entre les deux pinces (13, 14) fermées.

4. Machine à lier un boyau embossé suivant la revendication 3, **caractérisée en ce que** la pince (14) après le point où s'applique le lien est montée sur un chariot (15) qui peut effectuer un coulissement dans la direction de l'axe de symétrie du boyau embossé, ce mouvement étant effectué lorsque les spires du lien (28) sont appliquées et alors que les pinces (13, 14) sont encore fermées, de sorte qu'un coulissement longitudinal correspondant du boyau embossé a lieu et que sont ménagées ainsi les conditions pour que dans une opération ultérieure d'application d'un lien, les deux spires du lien (28) puissent s'appliquer sur le boyau.

5. Machine à lier un boyau embossé suivant la revendication 1, **caractérisée en ce que** deux des guides de lien (18, 26, 27), dont chacun est muni d'un frein de lien, sont disposés sur les joues (1a, 3) en des points diamétralement opposés respectivement, seul l'un des guides de lien (18, 26, 27) et seul le frein (6, 7, 8) correspondant étant en fonctionnement tandis que les autres servent de guide de fil de réserve et de frein de réserve correspondant ainsi que de compensation du balourd.

6. Machine à lier un boyau embossé suivant la revendication 1, **caractérisée en ce que** le moteur (12) d'entraînement du porte-bobine (1) tournant est un serve moteur sans balai qui peut mettre le porte-bobine (1) exactement en position et qui peut le commander de façon à donner au porte-bobine (1) à chaque cycle de travail un nombre déterminé à l'avance de rotations qui correspond au nombre de spires du lien (28) en chaque point du boyau embossé où s'applique le lien.

7. Machine à lier un boyau embossé suivant la revendication 1, **caractérisée en ce que** le diamètre de l'ouverture de passage ménagé dans la bobine (2) sur laquelle le lien (28) est enroulé, est choisi en fonction du plus grand diamètre du boyau embossé et **en ce que** le diamètre extérieur de la bobine (2) est au moins deux fois plus grand que le diamètre du boyau embossé.

8. Machine à lier un boyau embossé suivant la revendication 7, **caractérisée en ce que** le diamètre (D) extérieur de la bobine (2) est plus grand que 15 cm.

9. Machine à lier un boyau embossé suivant la revendication 1, **caractérisée en ce que** la bobine (2) sur laquelle le lien (28) est enroulé est en un matériau léger de préférence en une matière plastique.
